# EUROPÄISCHE PATENTSCHRIFT

(11) **EP 0 780 521 B1**
(45) Veröffentlichungstag und Bekanntmachung des Hinweises auf die Patenterteilung: **03.07.2002**
(21) Anmeldenummer: 96117694.8
(22) Anmeldetag: 05.11.1996
(51) Int. Cl.: E02D 29/14, F16B 19/06

(54) **Verriegelungsbolzen**
Blocking bolt
Boulon de verrouillage

(30) Priorität: 19.12.1995 DE 19547479; 26.01.1996 DE 19602800
(43) Veröffentlichungstag der Anmeldung: 25.06.1997
(73) Patentinhaber: ACO SEVERIN AHLMANN GMBH & CO. KG, D-24768 Rendsburg (DE)
(72) Erfinder: Arm, Wolfgang, 24768 Rendsburg (DE)
(74) Vertreter: Kruspig, Volkmar, Dipl.-Ing.

(56) Entgegenhaltungen:
- EP-A- 0 389 308
- EP-A- 0 605 792

## Beschreibung

Die Erfindung betrifft einen Verriegelungsbolzen für einen Schnellverschluß eines Abdeckrostes mit einem mit einer Entwässerungsrinne verbundenen oder integralen Verriegelungselement, wobei der Verriegelungsbolzen am Abdeckrost fixiert ist.

Ein Verriegelungsbolzen der ein angs genannten Art ist bereits aus der EP 0 605 792 A1 bekannt und in Fig. 6 der vorliegenden Anmeldung gezeigt. Dort ist ein Abdeckrost 10 auf Seitenwände 41, 41' einer Entwässerungsrinne 40 aufgelegt. Um den Abdeckrost 10 gegen Herausnehmen oder Herausschleudern beim Überfahren zu sichern, ist ein Verriegelungsbolzen 13 vorgesehen, der mit einem Ende am Abdeckrost 10 fixiert ist und mit seinem anderen Ende in eine mit der Entwässerungsrinne 40 verbundene Traverse 42 eingreift.

Beim Stand der Technik wird der Verriegelungsbolzen am Abdeckrost entweder durch Verschrauben oder durch eine formschlüssige "Snap-In"-Verbindung fixiert.

Beide Varianten haben den Nachteil, daß sie bei der Endmontage relativ viel Zeit erfordern. Weiterhin besteht bei derartigen Verbindungen stets die Gefahr, daß sie sich im Laufe der Zeit lösen. Dabei ist zu berücksichtigen, daß ein Abdeckrost, gerade wenn er einen Teil einer Verkehrsfläche bildet, oft heftigen Erschütterungen ausgesetzt ist, so daß ein sicherer und dauerhafter Halt gewährleistet sein muß.

Es wurden daher bereits Versuche unternommen, den Verriegelungsbolzen am Abdeckrost durch Annieten zu befestigen.

Dabei trat das Problem auf, daß der dafür erforderliche Stauchschaft in seiner Länge bedeutend größer ist als sein Durchmesser und herkömmlicherweise deshalb entweder das Taumelnietverfahren oder das Warmstauchverfahren angewandt werden müßten. Beide Verfahren sind hinsichtlich Fertigungszeit und Fertigungseinrichtungen aufwendig.

Aufgabe der vorliegenden Erfindung ist es daher, einen Verriegelungsbolzen zu schaffen, der einfach aufgebaut ist, und in einem zuverlässigen und kostengünstigen Verfahren in relativ kurzer Fertigungszeit und ohne aufwendige Fertigungseinrichtungen herstellbar und mit einem Bauteil, insbesondere einem Abdeckrost verbindbar ist. Ebenso soll ein dazugehöriges Verfahren angegeben werden.

Diese Aufgabe wird durch einen Gegenstand nach den Merkmalen der Ansprüche 1, 15, 21 oder 22 gelöst. Vorteilhafte Weiterbildungen sind in den Unteransprüchen angegeben.

Ein Kerngedanke der vorliegenden Erfindung besteht darin, am Verriegelungsbolzen rostseitig einen Stauchschaft vorzusehen, der in mehrere Teilbereiche unterteilt ist, die unterschiedliche Querschnittsformen, insbesondere unterschiedliche Durchmesser aufweisen, wobei jeder Teilbereich beim Stauchen verformt worden ist.

Ein sehr wirtschaftliches Verfahren zum Anstauchen von Köpfen stellt bekanntermaßen das Kaltstauch (Kaltschmiede)-Verfahren dar. Voraussetzungen zur Anwendung dieses Verfahrens sind aber
a) ein kaltstauchfähiger Werkstoff und
b) Einhaltung der Stauchverhältnisse, die besagen, daß das Verhältnis von Stauchschaftlänge zu Stauchschaftdurchmesser kleiner 1 sein muß.

Der Grundgedanke der vorliegenden Erfindung besteht nun darin, die unter b) genannte Voraussetzung dadurch zu erfüllen, daß der Stauchschaft in mehrere Teilbereiche unterteilt wird, die bereichsweise die Kaltstauchvoraussetzung erfüllen. Zumindest kann ein langgestreckter Stauchschaft durch Unterteilung in mehrere Teilbereiche unterschiedlichen Durchmessers an die erwähnte Bedingung angenähert werden, so daß diese überraschenderweise erfüllt wird und durch entsprechend geschicktes Vorgehen sich ein Ausknicken des insgesamt langgestreckten Stauchschaftes vermeiden läßt.

Erfindungsgemäß werden die einzelnen Teilbereiche so bemessen, daß ihre jeweilige Länge l kleiner als ihr jeweiliger Durchmesser d (l<d) ist. Darüber hinaus kann der Durchmesser des Stauchschaftes auch über einen einzelnen Teilbereich variieren. Die Bedingung (l<d) muß für diesen Teilbereich dann nur im Mittel erfüllt sein.

Gleichermaßen kann der Stauchschaft eine von der Kreisform abweichende Querschnittsform, beispielsweise Ellipsenform, aufweisen. Auch dann, im Hinblick auf die Bedingung (1<d), ist ein mittlerer Durchmesser zugrundezulegen.

Die Durchmesser der Teilbereiche sollten so bemessen sein, daß sich der Stauchschaft in Stauchrichtung verjüngt. Dadurch ergibt sich ein besonders vorteilhaftes Fließverhalten des gesamten Stauchschaftes.

Der in Stauchrichtung vorne liegende Teilbereich wird zuerst und mit höherer Fließrate verformt. Der im Durchmesser größere, in Stauchrichtung dahinter liegende Teilbereich wird erst dann maßgeblich verformt, wenn die Verformung des vorne liegenden Teilbereiches weitgehend abgeschlossen ist. Es fließt also der Bereich mit dem kleinsten Volumen so lange, bis der fließende Werkstoff vom umgebenden Werkstückmaterial begrenzt wird oder die Kaltverfestigung so groß wird, daß der darauf folgende Bereich zu fließen beginnt.

Um ein Ausknicken des Stauchschaftes zu verhindern, ist vorgesehen, die Teilbereiche des Stauchschaftes symmetrisch um eine längsverlaufende Mittelachse (A) des Stauchschaftes anzuordnen.

Je nach Anwendungsfall können die Teilbereiche des Stauchschaftes sowohl stufenförmig als auch kontinuierlich ineinander übergehen.

In einer bevorzugten Ausführungsform besteht der Stauchschaft aus zwei Teilbereichen, wobei der in Stauchrichtung vorne liegende Teilbereich in etwa Halbtonnenform aufweist und der im Durchmesser größere, in Stauchrichtung hinten liegende Teilbereich Zylinderform aufweist.

Diese Ausbildung des Stauchschaftes hat sich in praktischen Versuchen als besonders günstig erwiesen. Die dabei erzeugte Kopfform des Verriegelungsbolzens weist eine gleichmäßige Gestalt auf und sieht optisch ansprechend aus. Durch einen einzigen Stauchschlag läßt sich bei einem sehr gleichmäßigen Fluß des Materials eine symmetrische Kopfgeometrie ausbilden.

In einer weiter bevorzugten Ausführungsform sind die Teilbereiche derart geformt und bemessen, daß beim Stauchen einerseits die zur Aufnahme des Stauchschaftes vorgesehene Durchgangsöffnung im Abdeckrost mit Material gefüllt und andererseits auf der dem Verriegelungsbolzen abgewandten Seite des Abdeckrostes ein Kopf angeformt wird.

Vorteilhaft wird der in Stauchrichtung vorne liegende Teilbereich vom Gesamtvolumen her so bemessen, daß er die Durchgangsöffnung vom Abdeckrost vollständig auffüllt, so daß beim Stauchen des in Stauchrichtung dahinter liegenden Teilbereiches dieser zumindest teilweise an der Oberseite des Abdeckrostes, bzw. am Rand der Durchgangsöffnung zur Anlage kommt und sich im Stauchvorgang daran abstützen kann. Dadurch läßt sich eine ausgesprochen gleichmäßige Kopfform erreichen.

Nach dem erläuterten Grundgedanken der Erfindung ist es demgemäß überraschend möglich, einen Stauchschaft vorzusehen, dessen Gesamtlänge größer ist als sein maximaler Durchmesser. Das erfindungsgemäße Stufenstauchverfahren ist jedoch auch dann von Vorteil, wenn diese extremen Abmessungen nicht vorgesehen werden. Auch bei einem Stauchschaft, dessen Gesamtlänge von derselben Größenordnung wie sein maximaler Durchmesser ist, ist die Ausbildung von Teilbereichen unterschiedlichen Durchmessers überaus zweckmäßig, um ein gleichmäßiges Fließen des Materials und eine gute Kopfform zu erreichen.

Der Grundgedanke, den Stauchschaft zur Ausbildung eines Kopfes und/oder Vernietung eines Bauteils mit einem zweiten Bauteil in mehrere Teilbereiche unterschiedlichen Durchmessers zu unterteilen, ist selbstverständlich nicht auf einen Verriegelungsbolzen und die eingangs beschriebene Anwendung beschränkt. Prinzipiell kann jedes Bauteil, das durch Annieten an einem zweiten Bauteil befestigt werden oder bei dem durch Stauchen ein Kopf erzeugt werden soll, einen erfindungsgemäß ausgebildeten Stauchschaft aufweisen.

Schließlich ist ein Verfahren zum Vernieten eines Verriegelungsbolzens mit einem Abdeckrost angegeben, wobei der Verriegelungsbolzen einen Stauchschaft aufweist, der durch eine Durchgangsöffnung im Abdeckrost durchgeführt ist, ein erster Teilbereich des Stauchschaftes relativ rasch gestaucht wird und daraufhin mit einer vergleichsweise langsameren Fließrate ein zweiter Teilbereich des Stauchschaftes gestaucht wird. Dieses Verfahren ermöglicht eine Festlegung des Verriegelungsbolzens in der Durchgangsöffnung bereits mit Verformung des ersten Teilbereiches. Dadurch läßt sich der zweite Teilbereich des Stauchschaftes ohne Gefahr, daß der Stauchschaft insgesamt ausknickt, relativ leicht verformen und eine haltbare und dauerhafte Verbindung zwischen erstem und zweiten Bauteil erreichen.

Schließlich wird ein Verfahren zum Verbinden zweier Bauteile mittels eines langgestreckten Nietes angegeben, wobei der Stauchschaft des Nietes sich in Stauchrichtung verjüngt und über seinen Durchmessers mindestens zweifach abgesetzt ist derart, daß die Länge l des Stauchschaftes je abgesetzten Abschnitt zum Abschnittsdurchmesser d kleiner 1 ist (l<d), wobei beim Ausüben einer Nietkraft ein stufenweises Fließen der Abschnitte eintritt, ohne daß der Stauchschaft insgesamt ausknickt.

Die Erfindung wird nachstehend anhand der Beschreibung von Ausführungsbeispielen und unter Zuhilfenahme von Figuren näher erläutert.

Hierbei zeigen
- Fig. 1: einen Verriegelungsbolzen mit Stauchschaft vor dem Verformen;
- Fig. 2: einen Verriegelungsbolzen mit Stauchschaft nach dem Verformen;
- Fig. 3: eine alternative Ausführungsform eines Verriegelungsbolzens mit Stauchschaft;
- Fig. 4: eine weitere alternative Ausführungsform eines Verriegelungsbolzens mit Stauchschaft;
- Fig. 5: den in Fig. 3 gezeigten Verriegelungsbolzen von oben;
- Fig. 6: einen Schnellverschluß eines Abdeckrostes mit einer Entwässerungsrinne mittels eines Verriegelungsbolzens gemäß dem Stand der Technik und
- Fig. 7: eine Darstellung des Grundprinzips der Verformung des Stauchschaftes sowie gemäß Beispielen 1 bis 3 die Ausführungen des Stauchschaftes entsprechend der Beschaffenheit des jeweiligen Werkstückes.

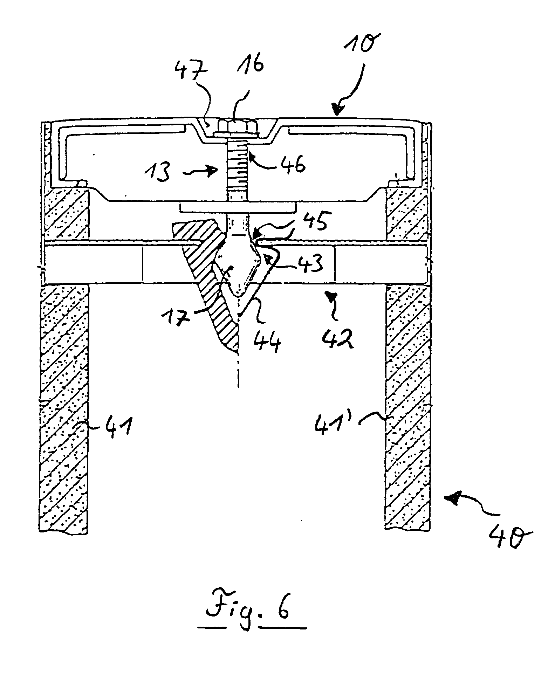

In Fig. 6 ist ein Schnellverschluß für einen Abdeckrost 10 mit einer Entwässerungsrinne 40 gezeigt. Da die Funktionsweise des Verriegelungsbolzens nach der Erfindung zum Verwenden eines Abdeckrostes 10 mit einer Entwässerungsrinne 40 im wesentlichen die gleiche ist, wie bei dem herkömmlichen in Fig. 6 gezeigten Verriegelungsbolzen, kann anhand dieser Figur auf den Einsatzzweck des erfindungsgemäßen Verriegelungsbolzens 13 geschlossen werden. Dabei sind gleichartige Bauteile oder Komponenten beim erfindungsgemäßen Verriegelungsbolzen 13 mit gleichen Bezugsziffern wie beim Stand der Technik gekennzeichnet.

Der Verriegelungsbolzen 13 ist rostseitig in einer Ausbuchtung 47 am Abdeckrost 10 befestigt. Diese Befestigung ist Gegenstand der Erfindung und wird weiter unten detaillierter beschrieben.

An seinem rostabgewandten Ende weist der Verriegelungsbolzen 13 eine Verdickung 17 auf, die in eine Aufnahmeöffnung 45 einer Feder 44 eingreift. Die Feder 44 ist in einer Öffnung 43 in einer Traverse 42 gehalten, die mit Seitenwänden 41, 41' einer Entwässerungsrinne 40 verbunden ist.

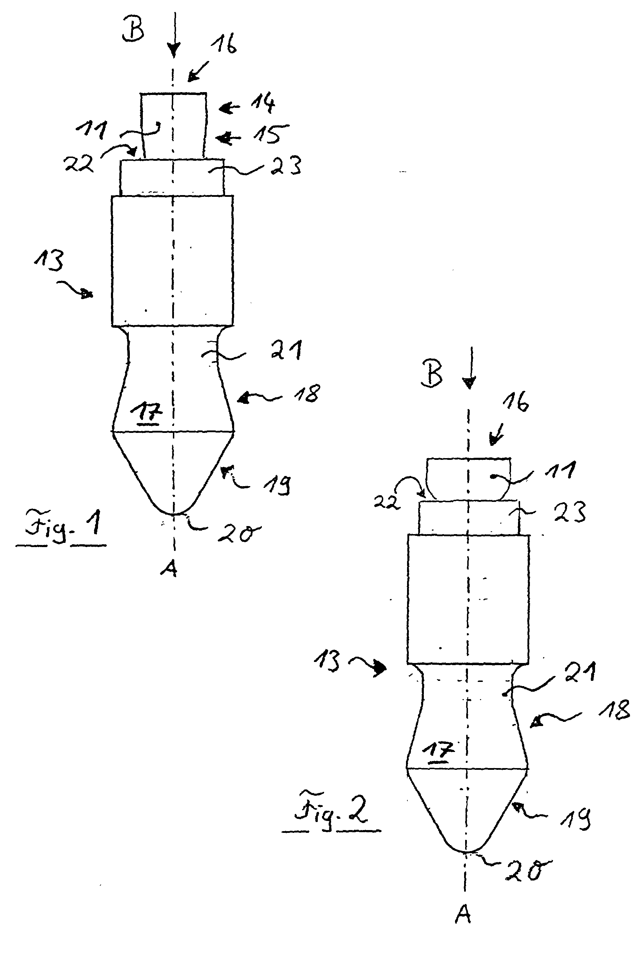

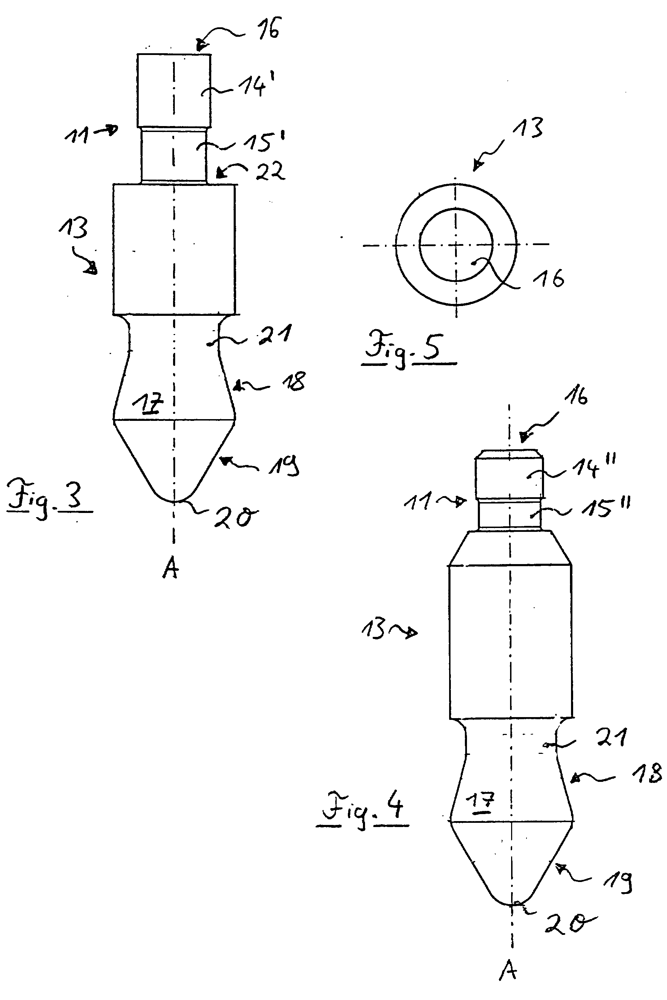

Der Verriegelungsbolzen nach Fig. 1 oder Fig. 2 ist entlang seiner Mittelachse A rotationssymmetrisch ausgebildet. Er weist an seinem einen Ende einen Schaft 21 und eine sich daran anschließende und bereits im Stand der Technik beschriebene Verdickung 17 auf. Die Verdickung 17 wird durch eine Haltefläche 18 und eine Konusfläche 19 definiert. Die Haltefläche 18 schließt sich an den im wesentlichen zylindrischen Schaft 21 an und ist etwa 15° gegen die Mittelachse nach außen geneigt, so daß die Verdickung 17 entsteht. Daran anschließend verjüngt sich der Verriegelungsbolzen endseitig über die Konusfläche 19 bis auf eine Spitze 20. Die Konusfläche 19 verläuft etwa in einem Winkel von 30° zur Mittelachse A. Mittels der beschriebenen Verdickung 17 kann der Verriegelungsbolzen 13 beispielsweise, wie beim Stand der Technik, in einer Feder 44 festgelegt werden.

An dem der Spitze 20 gegenüberliegenden Ende des Verriegelungsbolzens ist ein Stauchschaft 11 ausgebildet. Der Stauchschaft 11 verläuft ebenfalls symmetrisch zur Mittelachse A. Er ist in zwei Teilbereiche 14, 15 unterteilt. Der in Stauchrichtung B vorne liegende Teilbereich 15 verjüngt sich in Stauchrichtung und weist entweder eine Kegelstumpfform oder vorzugsweise eine Halbtonnenform auf. Der in Stauchrichtung dahinter liegende, endseitige Teilbereich 14 weist Zylinderform auf. Der Durchmesser des in Stauchrichtung vorne liegenden Teilbereiches 15 ist im Mittel geringer als der Durchmesser des in Stauchrichtung dahinter liegenden Teilbereiches 14. Die Teilbereiche 14 und 15 schließen mit gleichem Durchmesser aneinander an, so daß keine Stufe entsteht.

Der in Stauchrichtung vorne liegende Teilbereich 15 weist eine etwas geringere Länge als der dahinter liegende, endseitige Stauchbereich 14 auf.

In Stauchrichtung vor dem Stauchschaft 11 ist ein Abschnitt 23 größeren Durchmessers vorgesehen, der auf seiner dem Stauchschaft 11 zugewandten Seite eine senkrecht zur Mittelachse A verlaufende Anlagefläche 22 aufweist. An der Fläche 22 kommt die Unterseite eines Abdeckrostes 10 zur Anlage.

Im Stauchvorgang wird zunächst der in Stauchrichtung vorne liegende Teilbereich 15 mit kleinerem Durchmesser gestaucht, so daß er die im Abdeckrost 10 vorgesehene Durchgangsöffnung 46 ausfüllt. Der im Durchmesser größere, endseitige Teilbereich 14 wird zu einem Kopf 16 verformt.

Der Abdeckrost weist, wenn er als Gußstegrost ausgebildet ist, an der Nietstelle eine Stegdicke von etwa 5mm auf. Wenn aus einem Schaftdurchmesser von 8 mm ein ausreichend großer Kopf von mindestens 11 mm gestaucht werden soll, muß bei Einhaltung der erforderlichen Volumenkonstanz des Stauchschaftes 11 zum Querschnitt des gestauchten Kopfes 16 eine Länge des anfänglichen Stauchschaftes 11 von 16 mm vorgesehen werden.

Dieser Stauchschaft würde, wenn er nicht in Teilbereiche unterschiedlichen Durchmessers unterteilt wäre, beim Kaltstauchen sofort ausknicken, bevor es zum Fließen des Materials im Kopfbereich kommt.

Erst dadurch, daß der Stauchschaft 11 in seiner Länge von z. B. 16 mm hinsichtlich seines Durchmessers in zwei Teilbereiche 14, 15 unterteilt ist, läßt sich ein zufriedenstellendes Kaltstauchverfahren durchführen. Die erforderliche Stauchschaftgeometrie pro Teilbereich 14, 15 des Stauchschaftes 11 wird dabei eingehalten. Es ist nämlich das Verhältnis der Länge l eines Teilbereiches 14, 15 zum Durchmesser d kleiner als 1 (l<d).

Dadurch läßt sich der Stauchschaft 11 in einem einzigen Stauchvorgang beträchtlich verformen. Insbesondere kann der Verriegelungsbolzen 13 an einen Abdeckrost 10 angenietet und weiterhin ein ausreichend großer Kopf 16 angeformt werden.

In den Fig. 3 und 4 sind alternative Ausführungsformen eines Verriegelungsbolzens 13 gezeigt. Der in Fig. 3 gezeigte Verriegelungsbolzen ist für einen Abdeckrost vorgesehen, der als Stegrost ausgebildet ist, wobei dort für den Teilbereich 14' das erfindungsgemäße Verhältnis l<d nicht gezeigt ist. Der in Fig. 4 gezeigte Verriegelungsbolzen 13 ist für einen Abdeckrost 10 vorgesehen, der als Gußrost ausgebildet ist.

Fig. 5 zeigt den in Fig. 3 dargestellten Verriegelungsbolzen von oben.

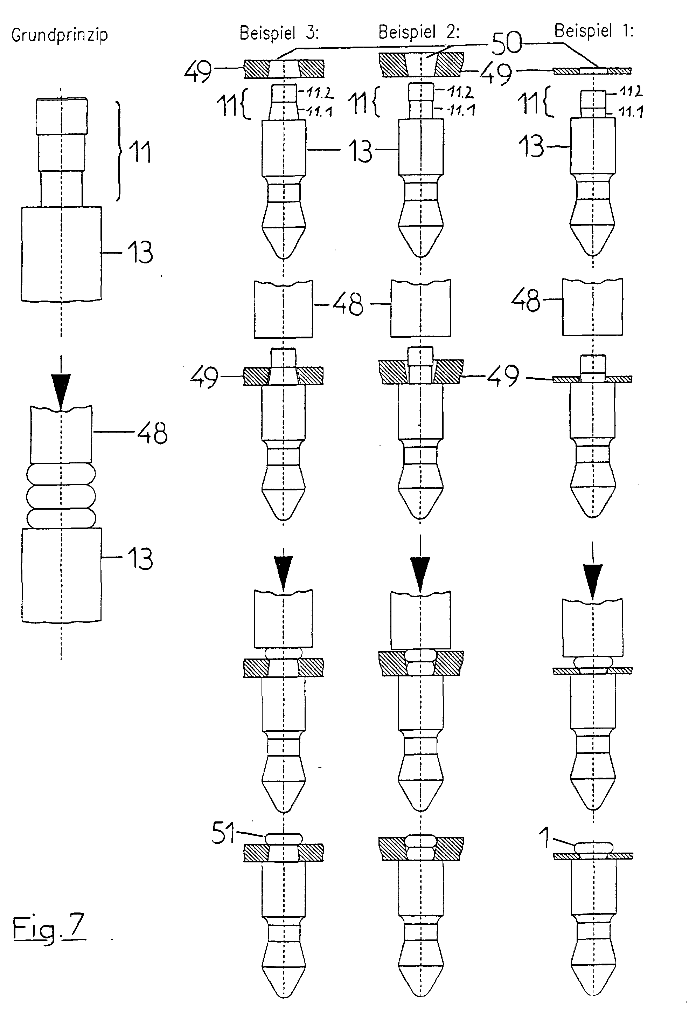

Anhand der Fig. 7, die die Verformung der verschiedenen Abschnitte des Stauchschaftes 11 eines Verriegelungsbolzens 13 zeigt, sollen die Phasen des Stauchens oder Deformierens der Teilbereiche oder Abschnitte am Stauchschaft erläutert werden.

So wird unter Grundprinzip figürlich dargestellt, wie unter Einwirkung eines Preßwerkzeuges 48, welches eine Druckkraft in Pfeilrichtung ausübt, sich das tonnenförmige Aufstauchen der Teilbereiche des Stauchschaftes vollzieht. Wie in den Beispielen 1 bis 3 anhand Fig. 7 gezeigt, richtet sich die Geometrie des Stauchschaftes 11 des jeweiligen beispielhaft gezeigten Verriegelungsbolzens 13 nach der Beschaffenheit des Werkstückes 49.

Gemäß gezeigtem Beispiel 1 ist ein Verriegelungsbolzen 13 am Blechsteg eines Blechsteg- oder Maschenrostes als Werkstück 49 anzunieten. Hier besteht der Stauchschaft 11 aus zwei Bereichen, die nacheinander beim Kaltstauchen fließen und unterschiedliche Wirkungen zeigen. Ein erster Bereich 11.1 ist ein sich nach der Stauchrichtung verjüngender Kegelstumpf und ein zweiter Bereich 11.2 hat eine Zylinderform. Beim Stauchvorgang beginnt der erste Bereich 11.1 an der Stelle des kleinsten Durchmessers zu fließen und füllt die Bohrung 50 im Werkstück 49 aus. Dadurch und durch die zunehmende Kaltverfestigung dieses Bereiches beginnt danach der zweite Bereich 11.2 zu fließen und bildet eine Tonnenform über der ausgefüllten Bohrung 50, die für den festen Sitz des Verrigelungsbolzens 13 sorgt. Die einzelnen Verformungsetappen unter Einwirkung des Preßwerkzeuges 48 mit dem Ergebnis der Ausbildung der erwähnten Tonnenform 51 sind in Fig. 7, Beispiel 1, gezeigt. Die Gesamtlänge des unverformten Stauchschaftes gemäß Beispiel 1 ist dabei größer als der größte Durchmesser im zweiten Bereich 11.2 des Stauchschaftes 11.

Gemäß dem gezeigten Beispiel 2 soll ein Verriegelungsbolzen 13 mit einem Gußstegrost vernietet werden. Hierbei soll ein überstehender Kopf am Gußsteg vermieden werden. Demnach weist beim Beispiel 2 die Bohrung 50 bzw. die Öffnung 50 eine kegelige Form auf. Der Stauchschaft 11 wird beim Beispiel 2 ebenfalls in zwei Bereiche eingeteilt. Der Bereich 11.2 weist einen größeren Durchmesser als der Bereich 11.1 auf. Beim eigentlichen Stauchvorgang fließen nacheinander der erste Bereich 11.1 und danach der zweite Bereich 11.2, ohne daß der Stauchschaft 11 insgesamt ausknickt. Die sich übereinander ausbildenden Stauchvolumina füllen die konische oder kegelige Bohrung 50 aus, so daß der Verriegelungsbolzen 13 fest im Werkstück 49, d. h. im Gußrost sitzt.

Gemäß gezeigtem, dritten Beispiel soll der Verriegelungsbolzen 13 mit sichtbarem Nietkopf am Werkstück 49 befestigt werden. Auch hier ist der Stauchschaft 11 in zwei Bereiche unterteilt. Ein erster Bereich 11.1 besitzt eine Kegelstumpfform, der die vorhandene Gießbohrung 50 im Werkstück 3 nahezu formschlüssig ausfüllt.

Ein zweiter Bereich 11.2 besitzt Zylinderform und dient der Nietkopfausbildung.

Die gesamte Stauchschaftlänge des Stauchschaftes 11 ist dabei wiederum größer als der größte Stauchschaftdurchmesser der beiden Bereiche 11.1 und 11.2. Beim Stauchen fließt zunächst der Bereich 11.2, bis durch die Kaltverfestigung und Durchmesservergrößerung der erste Bereich 11.1 zum Fließen angeregt wird. Im Anschluß daran stellt sich ein Fließen beider Bereiche 11.1 und 11.2 ein. Wenn der Bereich 11.1 das Bohrungsvolumen des Gußsteges vollständig ausgefüllt hat, fließt nur noch der zweite Bereich 11.2 und setzt mit seiner Tonnenform 51 den Verriegelungsbolzen 13 am Werkstück 49 fest.

Bei den vorstehend erläuterten Beispielen und hinsichtlich der Dimensionierung der Stauchgeometrie ist darauf zu achten, daß beim Stauchen der einzelnen Teilbereiche oder Abschnitte des Stauchschaftes 11 das Umformvermögen des entsprechenden Werkstoffes nicht überschritten wird, so daß Gefügezerstörungen vermieden werden und die gewünschte Haltbarkeit der Stauchverbindung mit Sicherheit gewährleistet ist.

Das anhand des Verriegelungsbolzens 13 beschriebene Stufenstauchverfahren zur Erzeugung von Köpfen an Stauchschäften und/oder zum Verbinden mit einem weiteren Bauteil ist nicht auf diese spezielle Anwendung beschränkt. Es kann vielmehr überall dort angewandt werden, wo ein langgestreckter Stauchschaft kaltverformt werden soll.

### Bezugszeichenliste

- 10: Abdeckrost
- 11: Stauchschaft
- 12: Durchgangsöffnung
- 13: Verriegelungsbolzen
- 14, 14', 14": Teilbereiche
- 15, 15', 15": Teilbereiche
- 16: Kopf
- 17: Verdickung
- 18: Haltefläche
- 19: Konusfläche
- 20: Spitze
- 21: Schaft
- 22: Anlagefläche
- 23: Abschnitt
- 40: Entwässerungsrinne
- 41': Seitenwand
- 42: Traverse
- 43: Öffnung (Traverse)
- 44: Feder
- 45: Aufnahmeöffnung (Feder)
- 46: Durchgangsöffnung (Rost)
- 47: Ausbuchtung
- 48: Preßwerkzeug
- 49: Werkstück
- 50: Bohrung
- 51: Tonnenform

## Patentansprüche

1. Verriegelungsbolzen für einen Schnellverschluß eines Abdeckrostes (10) mit einem mit einer Entwässerungsrinne verbundenen oder integralen Verriegelungselement, wobei der Verriegelungsbolzen am Abdeckrost fixiert ist,
**dadurch gekennzeichnet, daß**
der Verriegelungsbolzen rostseitig einen Stauchschaft (11) aufweist, der bei der Montage durch eine Durchgangsöffnung (12) im Abdeckrost (10) durchgeführt und bei einem Stauchen derart verformt worden ist, daß eine formschlüssige Verbindung zwischen Abdeckrost (10) und Verriegelungsbolzen (13) geschaffen wird, wobei der Stauchschaft (11) in mindestens zwei Teilbereiche (14, 15) unterteilt ist, die unterschiedliche Querschnittsformen, insbesondere unterschiedliche Durchmesser aufweisen, und jeder Teilbereich beim Stauchen verformt worden ist.

2. Verriegelungsbolzen nach Anspruch 1,
**dadurch gekennzeichnet, daß**
die einzelnen Teilbereiche (14, 15) so bemessen sind, daß ihre jeweilige Länge l kleiner als ihr jeweiliger Durchmesser d (l<d) ist.

3. Verriegelungsbolzen nach Anspruch 1 oder 2,
**dadurch gekennzeichnet, daß**
der Stauchschaft (11) in zwei Teilbereiche (14, 15) unterteilt ist.

4. Verriegelungsbolzen nach einem der Ansprüche 1 bis 3,
**dadurch gekennzeichnet, daß**
sich der Stauchschaft (11) in Stauchrichtung verjüngt.

5. Verriegelungsbolzen nach einem der Ansprüche 1 bis 4,
**dadurch gekennzeichnet, daß**
die einzelnen Teilbereiche (14, 15) des Stauchschaftes (11) symmetrisch um eine längsverlaufende Mittelachse (A) des Stauchschaftes (11) angeordnet sind.

6. Verriegelungsbolzen nach einem der Ansprüche 1 bis 5,
**dadurch gekennzeichnet, daß**
die Teilbereiche (14, 15) des Stauchschaftes (11) stufenförmig ineinander übergehen.

7. Verriegelungsbolzen nach einem der Ansprüche 1 bis 5,
**dadurch gekennzeichnet, daß**
die Teilbereiche (14, 15) des Stauchschaftes (11) kontinuierlich ineinander übergehen.

8. Verriegelungsbolzen nach einem der Ansprüche 1 bis 7,
**dadurch gekennzeichnet, daß**
der Stauchschaft rotationssymetrisch ausgebildet ist.

9. Verriegelungsbolzen nach einem der Ansprüche 1 bis 8,
**dadurch gekennzeichnet, daß**
der Stauchschaft (11) aus mehreren, insbesondere zwei zylinderförmigen Teilbereichen (14, 15) besteht.

10. Verriegelungsbolzen nach einem der Ansprüche 1 bis 8,
**dadurch gekennzeichnet, daß**
der Stauchschaft (11) aus einem zylinderförmigen Teilbereich (14) und einem halbtonnenförmigen Teilbereich (15) besteht.

11. Verriegelungsbolzen nach Anspruch 10,
**dadurch gekennzeichnet, daß**
die Länge des zylinderförmigen Teilbereichs (14) größer ist als die Länge des halbtonnenförmigen Teilbereichs (15).

12. Verriegelungsbolzen nach einem der Ansprüche 2 bis 11,
**dadurch gekennzeichnet, daß**
die Teilbereiche derart geformt und bemessen sind, daß beim Stauchen einerseits die Durchgangsöffnung (12) im Abdeckrost (10) mit Material gefüllt und andererseits auf der dem Verriegelungsbolzen (13) abgewandten Seite des Abdeckrostes (10) ein Kopf (16) angeformt wird.

13. Verriegelungsbolzen nach Anspruch 12,
**dadurch gekennzeichnet, daß**
der dem Verriegelungsbolzen (13) zugewandte Teilbereich (15) so bemessen ist, daß er die Durchgangsöffnung (12) vollständig auffüllt, so daß beim Stauchen des dem Verriegelungsbolzen (13) abgewandten Teilbereichs (14) dieser zumindest teilweise an der Oberseite des Abdeckrostes (10) zur Anlage kommt.

14. Verriegelungsbolzen nach einem der vorhergehenden Ansprüche,
**dadurch gekennzeichnet, daß**
die Gesamtlänge des Stauchschaftes (11) größer als sein maximaler Durchmesser ist.

15. Stauchschaft an einem Verriegelungsbolzen eines Abdeckrostes, der zur Ausbildung eines Kopfes (16) und/oder Vernietung des Verriegelungsbolzens (13) mit dem Abdeckrost (10) entlang seiner Längsrichtung stauchbar ist,
**dadurch gekennzeichnet, daß**
ein Stauchschaft (11) vorgesehen ist, der in mindestens zwei Teilbereiche (14, 15) unterteilt ist, die unterschiedliche Querschnittsformen, insbesondere unterschiedliche Durchmesser aufweisen, und jeder Teilbereich beim Stauchen verformt worden ist.

16. Stauchschaft nach Anspruch 15,
**dadurch gekennzeichnet, daß**
der Stauchschaft in zwei Teilbereiche (14, 15) unterteilt ist.

17. Stauchschaft nach Anspruch 15 oder 16,
**dadurch gekennzeichnet, daß**
sich der Stauchschaft (11) bauteilseitig verjüngt.

18. Stauchschaft nach einem der Ansprüche 15 bis 17,
**dadurch gekennzeichnet, daß**
die einzelnen Teilbereiche (14, 15) des Stauchschaftes (11) symmetrisch um eine längsverlaufende Mittelachse (A) des Stauchschaftes (11) angeordnet sind.

19. Stauchschaft nach einem der Ansprüche 15 bis 18,
**dadurch gekennzeichnet, daß**
die Teilbereiche (14, 15) des Stauchschaftes (11) stufenförmig ineinander übergehen.

20. Stauchschaft nach einem der Ansprüche 15 bis 18,
**dadurch gekennzeichnet, daß**
die Teilbereiche (14, 15) des Stauchschaftes (11) kontinu ierlich ineinander übergehen.

21. Verfahren zum Vernieten eines Verriegelungsbolzens (13) mit einem Abdeckrost (10), wobei der Verriegelungsbolzen (13) einen Stauchschaft (11) aufweist, der durch eine Durchgangsöffnung (12) im Abdeckrost (10) durchführbar ist, und in zwei Teilbereiche unterteilt ist, die unterschiedliche Querschnittsformen, insbesondere unterschiedliche Durchmesser aufweisen,
**dadurch gekennzeichnet, daß**
- zunächst der Stauchschaft (11) des Verriegelungsbolzens (13) durch eine Durchgangsöffnung (12) des Abdeckrostes (10) durchgeführt wird,
- ein erster Teilbereich (15) des Stauchschaftes (11) relativ rasch gestaucht wird, und
- daraufhin mit einer vergleichsweise langsameren Fließrate ein zweiter Teilbereich (15) des Stauchschaftes (11) gestaucht wird.

22. Verfahren zum Verbinden zweier Bauteile mittels eines langgestreckten Nietes, wobei der Stauchschaft (11) des Nietes sich in Stauchrichtung verjüngt und über seinen Durchmesser mindestens zweifach abgesetzt ist derart, daß die Länge l des Stauchschaftes je abgesetztem Abschnitt zum Abschnittsdurchmesser d < 1 ist (l:d<1), und wobei beim Ausüben einer Nietkraft ein stufenweises Fließen der Abschnitte eintritt, ohne daß der Stauchschaft insgesamt ausknickt.

23. Verfahren nach Anspruch 22,
**dadurch gekennzeichnet, daß**
das stufenweise Fließen der jeweiligen Abschnitte nacheinander eintritt.

## Claims

1. A locking bolt for a quick-acting coupling of a covering grate (10) with a locking element which is connected or integral with a drainage channel, with the locking bolt being fixed at the covering grate,
**characterised in that**
the locking bolt comprises an upsetting shaft (11) at the side of the grate, which in the assembly has been passed through a through hole (12) in the covering grate (10) and deformed in such a manner that a positive connection is created between the covering grate (10) and locking bolt (13), with the upsetting shaft (11) being divided into at least two partial sections (14, 15) which comprise different cross-sectional shapes, in particular different diameters, and each partial section having been deformed in upsetting.

2. The locking bolt according to Claim 1,
**characterised in that**
the individual partial sections (14, 15) are dimensioned in such a manner that their respective length l is smaller than the respective diameter d (l < d).

3. The locking bolt according to Claim 1 or 2,
**characterised in that**
the upsetting shaft (11) is divided into two partial sections (14, 15).

4. The locking bolt according to one of Claims 1 to 3,
**characterised in that**
the upsetting shaft (11) is tapered in the upsetting direction.

5. The locking bolt according to one of Claims 1 to 4,
**characterised in that**
the individual partial sections (14, 15) of the upsetting shaft (11) are arranged symmetrically about a longitudinal centre axis (A) of the upsetting shaft (11).

6. The locking bolt according to one of Claims 1 to 5,
**characterised in that**
the partial sections (14, 15) of the upsetting shaft (11) merge into one another in a stepwise manner.

7. The locking bolt according to one of Claims 1 to 5,
**characterised in that**
the partial sections (14, 15) of the upsetting shaft (11) merge continuously into one another.

8. The locking bolt according to one of Claims 1 to 7,
**characterised in that**
the upsetting shaft is formed rotation symmetrically.

9. The locking bolt according to one of Claims 1 to 8,
**characterised in that**
the upsetting shaft (11) consists of several, in particular two, cylindrical partial sections (14, 15).

10. The locking bolt according to one of Claims 1 to 8,
**characterised in that**
the upsetting shaft (11) consists of a cylindrical partial section (14) and a half-barrel-shaped partial section (15).

11. The locking bolt according to Claim 10,
**characterised in that**
the length of the cylindrical partial section (14) is greater than the length of the half-barrel-shaped partial section (15).

12. The locking bolt according to one of Claims 2 to 11,
**characterised in that**
the partial sections are shaped and dimensioned in such a manner that, on the one hand, upon upsetting the through hole (12) in the covering grate (10) is filled with material and, on the other hand, a head (16) is formed on the side of the covering grate (10) facing away from the locking bolt (13).

13. The locking bolt according to Claim 12,
**characterised in that**
the partial section (15) facing towards the locking bolt (13) is dimensioned in such a manner that it fills the through hole (12) completely, so that upon upsetting the partial section (14) facing away from the locking bolt (13), this will abut on the upper side of the covering grate (10) at least partially.

14. The locking bolt according to one of the previous claims,
**characterised in that**
the total length of the upsetting shaft (11) is greater than its maximum diameter.

15. An upsetting shaft at a locking bolt of a covering grate, which can be upset for the formation of a head (16) and/or under riveting of the locking bolt (13) with the covering grate (10) along its longitudinal direction,
**characterised in that**
an upsetting shaft (11) is provided which is divided into at least two partial sections (14, 15) which comprise different cross-sectional shapes, in particular different diameters, and each partial section has been deformed upon upsetting.

16. The upsetting shaft according to Claim 15,
**characterised in that**
the upsetting shaft is divided into two partial sections (14, 15).

17. The upsetting shaft according to Claim 15 or 16,
**characterised in that**
the upsetting shaft (11) is tapered towards the component side.

18. The upsetting shaft according to one of Claims 15 to 17,
**characterised in that**
the individual partial sections (14, 15) of the upsetting shaft (11) are arranged symmetrically about a longitudinal centre axis (A) of the upsetting shaft (11).

19. The upsetting shaft according to one of Claims 15 to 18,
**characterised in that**
the partial sections (14, 15) of the upsetting shaft (11) merge into one another in a stepwise manner.

20. The upsetting shaft according to one of Claims 15 to 18,
**characterised in that**
the partial sections (14, 15) of the upsetting shaft (11) merge continuously into one another.

21. A method for riveting a locking bolt (13) with a covering grate (10), with the locking bolt (13) comprising an upsetting shaft (11) which can be passed through a through hole (12) in the covering grate (10) and being divided into two partial sections which have different cross-sectional shapes, in particular different diameters,
**characterised in that**
- first the upsetting shaft (11) of the locking bolt (13) is passed through a through hole (12) of the covering grate (10),
- a first partial section (14) of the upsetting shaft (11) is upset relatively rapidly, and
- then a second partial section (15) of the upsetting shaft (11) is upset under a comparably slower yield rate.

22. A method for the connection of two components by means of a longitudinal rivet, with the upsetting shaft (11) of the rivet tapering in the upsetting direction and being stepped at least twice over its diameter in such a manner that the length 1 of the upsetting shaft per stepped section relative to the section diameter is d < l (l:d < 1), and with the application of a riveting force a stepwise yielding of the sections occurring without giving way to buckling of the upsetting shaft as a whole.

23. The method according to Claim 22,
**characterised in that**
the stepwise yielding of the respective sections occurs in succession.

## Revendications

1. Boulon de verrouillage pour une fermeture rapide d'une grille de recouvrement (10) comportant un élément de verrouillage relié à une rigole de drainage ou monobloc, le boulon de verrouillage étant fixé à la grille de recouvrement,
**caractérisé en ce que** le boulon de verrouillage comporte, côté grille, une tige de refoulement (11) qui, au moment du montage, est passée à travers une ouverture de passage (12) ménagée dans la grille de recouvrement (10) et qui sous refoulement a été déformée de manière réaliser une liaison par complémentarité de forme entre la grille de recouvrement (10) et le boulon de verrouillage (13), la tige de refoulement (11) étant divisée en au moins deux zones partielles (14, 15) qui présentent des formes différentes de leur section transversale, en particulier des diamètres différents, et chaque zone partielle ayant été déformée pendant le refoulement.

2. Boulon de verrouillage selon la revendication 1,
**caractérisé en ce que** les différentes zones partielles (14, 15) ont des dimensions telles que leur longueur (l) respective est inférieure à leur diamètre (d) respectif (l < d).

3. Boulon de verrouillage selon la revendication 1 ou 2,
**caractérisé en ce que** la tige de refoulement (11) est divisée en deux zones partielles (14, 15).

4. Boulon de verrouillage selon l'une des revendications 1 à 3,
**caractérisé en ce que** la tige de refoulement (11) se rétrécit dans le sens du refoulement.

5. Boulon de verrouillage selon l'une des revendications 1 à 4,
**caractérisé en ce que** les différentes zones partielles (14, 15) de la tige de refoulement (11) sont disposées symétriquement par rapport à un axe médian (A) s'étendant longitudinalement de la tige de refoulement (11).

6. Boulon de verrouillage selon l'une des revendications 1 à 5,
**caractérisé en ce que** les zones partielles (14, 15) de la tige de refoulement (11) se prolongent l'une l'autre en forme de gradin.

7. Boulon de verrouillage selon l'une des revendications 1 à 5,
**caractérisé en ce que** les zones partielles (14, 15) de la tige de refoulement (11) se prolongent l'une l'autre en continu.

8. Boulon de verrouillage selon l'une des revendications 1 à 7,
**caractérisé en ce que** la tige de verrouillage présente une symétrie de révolution.

9. Boulon de verrouillage selon l'une des revendications 1 à 8,
**caractérisé en ce que** la tige de refoulement (11) est constituée de plusieurs, en particulier de deux zones partielles (14, 15) de forme cylindrique.

10. Boulon de verrouillage selon l'une des revendications 1 à 8,
**caractérisé en ce que** la tige de refoulement (11) est constituée d'une zone partielle (14) de forme cylindrique et d'une zone partielle (15) en forme de demi-tonneau.

11. Boulon de verrouillage selon la revendication 10,
**caractérisé en ce que** la longueur de la zone partielle (14) de forme cylindrique est supérieure à la longueur de la zone partielle (15) en forme de demi-tonneau.

12. Boulon de verrouillage selon l'une des revendications 2 à 11,
**caractérisé en ce que** les zones partielles ont des formes et des dimensions telles que pendant le refoulement d'une part l'ouverture de passage (12) ménagée dans la grille de recouvrement (10) est remplle de matière et d'autre part, une tête (16) est formée sur le côté de la grille de recouvrement (10) opposé au boulon de verrouillage (13).

13. Boulon de verrouillage selon la revendication 12,
**caractérisé en ce que** la zone partielle (15) toumée vers le bouton de verrouillage (13) a des dimensions telles qu'elle remplit totalement l'ouverture de passage (12), ce qui fait que pendant le refoulement de la zone partielle (14), tournée à l'opposé du boulon de verrouillage (13), celle-ci vient s'appliquer au moins en partie contre la face supérieure de la grille de recouvrement (10).

14. Boulon de verrouillage selon l'une des revendications précédentes,
**caractérisé en ce que** la longueur totale de la tige de refoulement (11) est supérieure à son diamètre maximal.

15. Tige de refoulement sur un boulon de verrouillage d'une grille de recouvrement, qui peut être refoulée le long de sa direction longitudinale pour former une tète (16) et/ou pour river le boulon de verrouillage (13) sur la grille de recouvrement (10),
**caractérisée en ce qu'**il est prévu une tige de refoulement (11) qui est divisée en au moins deux zones partielles (14, 15) lesquelles présentent des formes différentes de leur section transversale, en particulier des diamètres différents, et chaque zone partielle a été déformée pendant le refoulement.

16. Tige de refoulement selon la revendication 15,
**caractérisé en ce que** la tige de refoulement est divisée en deux zones partielles (14, 15).

17. Tige de refoulement selon la revendication 15 ou 16,
**caractérisée en ce que** la tige de refoulement (11) se rétrécit côté composant.

18. Tige de refoulement selon l'une des revendications 15 à 17,
**caractérisée en ce que** les différentes zones partielles (14, 15) de la tige de refoulement (11) sont disposées symétriquement par rapport à un axe médian (L) s'étendant longitudinalement de la tige de refoulement (11).

19. Tige de refoulement selon l'une des revendications 15 à 18,
**caractérisée en ce que** les zones partielles (14, 15) de la tige de refoulement (11) se prolongent l'une l'autre en forme de gradin.

20. Tige de refoulement selon l'une des revendications 15 à 18,
**caractérisée en ce que** les zones partielles (14,15) de la tige de refoulement (11) se prolongent l'une l'autre en continu.

21. Procédé pour river un boulon de verrouillage (13) sur une grille de recouvrement (10), le boulon de verrouillage (13) comportant une tige de refoulement (11) qui peut être passée à travers une ouverture de passage (12) ménagée dans la grille de recouvrement (10), et est divisée en deux zones partielles qui présentent des formes différentes de leur section transversale, en particulier des diamètres différents,
**caractérisé en ce que**
- la tige de refoulement (11) du boulon de verrouillage (13) est d'abord passée à travers une ouverture de passage (12) de la grille de recouvrement (10),
- une première zone partielle (16) de la tige de refoulement (11) est refoulée relativement rapidement, et
- après cela, une deuxième zone partielle (15) de la tige de refoulement (11) est refoulée avec une vitesse de fluage relativement plus lente.

22. Procédé pour relier deux composants au moyen d'un rivet allongé, dans lequel la tige de refoulement (11) du rivet se rétrécit dans le sens de refoulement et est étagée au moins deux fois sur son diamètre, de manière que la longueur I de la tige de refoulement pour chaque tronçon étagé, par rapport au diamètre d < I du tronçon, soit dans un rapport (l:d < 1), et dans lequel, lorsqu'on exerce une force de rivetage, il se produit un fluage progressif des tronçons, sans que la tige de refoulement ne se plie dans son ensemble.

23. Procédé selon la revendication 22,
**caractérisé en ce que** le fluage progressif des tronçons respectifs intervient successivement.
